# FASCICULE DE BREVET EUROPEEN

(11) **EP 0 955 396 B1**
(45) Date de publication et mention de la délivrance du brevet: **24.07.2002**
(21) Numéro de dépôt: 99420108.5
(22) Date de dépôt: 04.05.1999
(51) Int. Cl.: C25D 3/66, B23H 7/08

(54) **Procédé et dispositif pour la fabrication d'un fil électrode pour électroérosion**
Vorrichtung und Verfahren zum Herstellen von Drahtelektroden zum funkenerosiven Schneiden
Method and apparatus for making wire electrodes for electric discharge machining

(30) Priorité: 07.05.1998 FR 9805990
(43) Date de publication de la demande: 10.11.1999
(73) Titulaire: THERMOCOMPACT, 74370 Metz Tessy (FR)
(72) Inventeur: Lacourcelle, Louis, 34700 Saint Jean de la Blaquiere (FR)
(74) Mandataire: Poncet, Jean-François

(56) Documents cités:
- EP-A- 0 185 492
- EP-A- 0 811 701
- CH-A- 655 265
- FR-A- 2 418 699
- FR-A- 2 502 647

## Description

La présente invention concerne les électrodes en forme de fil que l'on utilise dans l'usinage de pièces métalliques par électroérosion.

Dans un tel usinage, décrit par exemple dans le document FR 2 418 699 A, une électrode en forme de fil est entraînée en translation longitudinale, et une portion dudit fil est guidée et tendue selon un segment rectiligne déplacé latéralement selon une trajectoire à proximité d'une pièce métallique à usiner. Un générateur électrique produit une différence de potentiel entre la pièce à usiner et le fil métallique formant l'électrode. Un usinage se produit dans la zone d'usinage comprise entre le fil formant l'électrode et la pièce métallique, et érode progressivement la pièce et le fil.

On a depuis longtemps cherché à améliorer les qualités du fil électrode pour électroérosion, en conciliant une bonne résistance mécanique à la traction, une bonne conductivité électrique du fil, et une meilleure régularité de production des étincelles d'étincelage érosif dans la zone d'usinage comprise entre le fil électrode et la pièce à usiner.

Par exemple, le document US 4 287 404 A décrit un procédé et un dispositif de fabrication d'un fil électrode pour électroérosion ayant une âme filiforme entourée d'une couche de métal à faible température de vaporisation tel que le zinc, le cadmium, l'étain, le plomb, l'antimoine et le bismuth. Le dépôt de la couche périphérique métallique est effectué par une étape de dépôt électrolytique à froid à partir d'un bain de sel métallique en solution aqueuse, suivie d'une étape de tréfilage. Un tel procédé présente l'inconvénient de produire un fil électrode dont la couche périphérique se vaporise trop vite et assure une protection insuffisante de l'âme pendant l'électroérosion.

On a trouvé avantage à échauffer le fil après dépôt électrolytique de la couche superficielle de métal à faible température de vaporisation, comme enseigné dans le document EP 0 185 492 A, de façon à réaliser un alliage diffusé. Mais un tel procédé ne permet pas de produire un fil électrode à couche superficielle d'alliage diffusé d'épaisseur et de structure maîtrisées.

Le document US 4 169 426 A décrit un autre procédé de fabrication d'un fil électrode pour électroérosion ayant une âme filiforme entourée d'une couche métallique, dans lequel on fait passer en continu un fil conducteur d'entrée dans un bain de métal fondu, puis on refroidit rapidement le fil pour éviter la formation de composés intermétalliques à l'interface entre l'âme filiforme et la couche métallique périphérique. On soumet ensuite le fil à un traitement thermique pendant plusieurs minutes à 320° C, avant de le tréfiler pour l'amener au diamètre final désiré. Un tel procédé présente également l'inconvénient de ne pas maîtriser l'épaisseur et la structure de l'enrobage.

Le document CH 655 265 A propose de préchauffer le fil conducteur d'entrée par effet Joule, en le faisant parcourir par un courant électrique approprié, avant de le faire passer dans un bain de métal fondu.

Le document EP 0 811 701 A enseigne un procédé similaire de fabrication de fil d'électroérosion par passage du fil dans un bain de métal fondu, dans lequel on échauffe le fil par effet Joule pendant son passage dans le bain de métal fondu. Le procédé ne permet pas mieux que les précédents de maîtriser l'épaisseur et la structure de l'enrobage.

Lors d'un processus de fabrication d'un fil électrode pour électroérosion au moyen de l'un quelconque des procédés mentionnés ci-dessus, il est particulièrement difficile de régler la quantité de métal déposée formant l'enrobage, et surtout la proportion de métal diffusé, et par conséquent la nature des phases d'alliage obtenues. Par exemple, dans le procédé du document EP 0 185 492 A, la diffusion thermique des métaux est très sensible à la fois à la température à laquelle est porté le fil et à la durée de l'échauffement, de sorte que l'obtention d'une structure particulière de répartition des concentrations de métal dans l'enrobage nécessite un réglage très précis des conditions d'échauffement du fil pendant l'étape de diffusion, ce qui est difficile à réaliser industriellement. En outre, on ne peut pas obtenir de manière simple, dans une seule opération, une structure de fil présentant par exemple une couche superficielle en zinc pur recouvrant une couche intermédiaire de laiton diffusé.

La difficulté est que l'enrobage du fil électrode pour électroérosion doit avoir une épaisseur suffisante pour constituer la couche d'usure lors de l'utilisation du fil pour un usinage par électroérosion, et cet enrobage doit présenter des propriétés satisfaisantes et adaptées aux conditions d'usinage à réaliser. On cherche notamment à réaliser une couche de laiton diffusé présentant une structure cristalline de phase β, favorisant une plus grande vitesse d'électroérosion. Mais l'obtention de cette couche de phase β dépend très sensiblement des conditions de température lors de l'étape de diffusion, et il est difficile de réaliser une production industrielle constante et maîtrisée.

Le document FR 2 502 647 A concerne un procédé de laitonnage de pièces métalliques telles qu'un fil de grande longueur pour armatures de pneumatiques. Sur une âme en fer, on dépose une couche de cuivre de faible épaisseur (0,28 µ), puis on dépose une couche de zinc par électrolyse et on chauffe le fil pour assurer une diffusion complète du cuivre et du zinc, réalisant une couche de laiton α favorisant l'adhérence entre le fil et le caoutchouc du pneumatique. Le fil obtenu présente une épaisseur d'enrobage trop faible pour être utilisable en électroérosion, et le laiton α n'est pas adapté à l'électroérosion. Le procédé utilisé ne permettrait pas l'obtention d'un fil ayant un enrobage d'épaisseur suffisante pour être utilisable en électroérosion.

Le problème proposé par la présente invention est de concevoir des moyens permettant, de façon simple et peu onéreuse, d'augmenter sensiblement les possibilités et la flexibilité de fabrication des fils électrodes pour électroérosion comportant au moins une couche de métal ou d'alliage diffusé autour d'une âme filiforme conductrice de l'électricité. On cherche à régler à volonté la teneur en métaux dans les différentes couches formant l'enrobage, et l'épaisseur de ces couches, pour adapter la structure du fil électrode aux besoins.

Selon un perfectionnement de l'invention, on cherche simultanément à améliorer l'accrochage de la couche de métal ou d'alliage sur l'âme, afin de permettre le tréfilage ultérieur du fil sans dégradation sensible de la couche métallique périphérique.

Selon un autre objet de l'invention, on cherche un moyen permettant de réaliser à volonté une telle couche de métal ou d'alliage dont la portion superficielle contient une proportion élevée d'un métal à faible température de vaporisation tel que le zinc, le cadmium, l'étain, le plomb, l'antimoine ou le bismuth.

Pour atteindre ces objets ainsi que d'autres, l'invention prévoit un procédé de fabrication d'un fil électrode pour électroérosion ayant une âme filiforme conductrice de l'électricité entourée d'un enrobage métallique à zone diffusée et adapté pour constituer la zone d'usure du fil lors de l'électroérosion ; ce procédé comprend au moins une étape d'électrolyse du fil électrode défilant dans un bain d'électrolyse composé essentiellement de sels fondus, pour assurer simultanément un apport de métal ou d'alliage constituant un dépôt sur une couche sous-jacente de métal ou d'alliage et la diffusion thermique dans la zone diffusée entre ledit dépôt et ladite couche sous-jacente.

Dans le bain d'électrolyse, les sels sont portés à une température supérieure à leur température de fusion, et l'on pourra également désigner ce bain dans la suite de la description et dans les revendications par l'expression "bain de sels fondus".

Ainsi, contrairement aux procédés électrolytiques connus de fabrication des fils électrodes pour électroérosion, l'électrolyse se fait non pas à partir d'un bain de sels métalliques en solution aqueuse, mais à partir d'un bain d'un ou plusieurs sels métalliques maintenus à une température supérieure à leur température de fusion.

Le bain de sels fondus contient au moins un sel d'un métal entrant dans la composition de l'enrobage métallique.

Selon un mode de réalisation avantageux, le bain de sels fondus contient un sel de zinc.

De bons résultats sont obtenus en utilisant un bain de sels fondus contenant l'un au moins des sels métalliques de la famille des chlorures, iodures, bromures et sulfates.

On peut avantageusement ajouter, dans le bain de sels fondus, au moins un sel de métal alcalin ou alcalino-terreux tel que chlorure de sodium, chlorure de potassium, chlorure de lithium, dont la présence abaisse la température de fusion du bain de sels fondus et améliore la conductibilité électrique du bain. Cela permet d'augmenter la plage de variation possible de la température vers les températures basses, et d'augmenter ainsi la plage de variation possible de vitesse de diffusion thermique dans la zone diffusée entre le dépôt et la couche sous-jacente.

En pratique, le bain d'électrolyse à sels métalliques en fusion peut avantageusement être au contact d'une masse métallique formée du ou des mêmes métaux constitutifs des sels. La masse métallique constitue l'anode ou pôle positif, tandis que l'âme filiforme conductrice de l'électricité passe en continu dans le bain de sels fondus et constitue la cathode ou pôle négatif.

La masse métallique d'anode peut être sous forme solide. En alternative, la masse métallique d'anode peut être en fusion, au contact d'une électrode solide telle que par exemple une électrode en graphite qui assure la polarité positive.

L'invention met à profit l'indépendance des paramètres de réglage de la vitesse d'apport de métal par électrolyse et de la vitesse de diffusion thermique dans la zone diffusée. Ainsi, au cours de l'étape d'électrolyse, les valeurs de densité de courant électrique d'électrolyse, de température du bain d'électrolyse et de durée de défilement du fil électrode dans le bain d'électrolyse constituent des paramètres que l'on règle de façon à obtenir la structure désirée de l'enrobage métallique.

Selon une possibilité avantageuse, les valeurs de densité de courant électrique d'électrolyse et de température du bain d'électrolyse, sont choisies de façon que la vitesse de dépôt de métal ou d'alliage soit supérieure à la vitesse de diffusion thermique, de sorte que la zone de surface du fil électrode est formée de métal ou alliage de dépôt non diffusé et homogène, recouvrant une zone de diffusion de laquelle elle est séparée par une interface nette.

Dans ce cas, on peut considérer que la durée de défilement du fil électrode dans le bain d'électrolyse est choisie assez courte pour que la diffusion du métal ou alliage du dépôt soit incomplète. En choisissant une durée de défilement courte, il est possible de réaliser en une seule étape selon l'invention, un fil électrode pour électroérosion ayant une couche de surface en métal ou alliage non diffusé et relativement épaisse, recouvrant une couche diffusée de plus faible épaisseur.

Selon une autre possibilité, les valeurs de densité de courant électrique d'électrolyse et de température du bain d'électrolyse sont choisies de façon que la vitesse de dépôt de métal ou d'alliage soit inférieure à la vitesse de diffusion thermique, de sorte que la zone de surface du fil électrode est formée de métal ou alliage diffusé. Dans ce cas, on peut considérer que la durée de défilement du fil électrode dans le bain d'électrolyse est choisie assez longue pour que la diffusion du métal ou alliage du dépôt soit complète.

Pour une bonne adaptation aux conditions rencontrées lors d'un usinage par électroérosion, l'apport de métal ou d'alliage peut avantageusement être assuré en quantité suffisante pour que l'enrobage présente dans le fil électrode final une épaisseur de plusieurs microns.

A titre d'exemple, le métal d'apport peut être le zinc, et la couche sous-jacente peut être en cuivre ou alliage de cuivre.

Selon un mode de réalisation avantageux, pendant son passage dans le bain de sels fondus, on augmente l'échauffement de l'âme filiforme par effet Joule en faisant passer un courant électrique auxiliaire approprié dans le tronçon d'âme filiforme traversant le bain de sels fondus.

Selon un mode de réalisation de l'invention, un dispositif pour la fabrication d'un fil électrode pour électroérosion ayant une âme filiforme conductrice de l'électricité entourée d'un enrobage métallique comprend :
- un récipient contenant un bain d'électrolyse composé essentiellement de sels métalliques fondus, adapté pour permettre le passage en continu de l'âme filiforme à travers le bain de sels fondus, et comprenant des moyens de chauffage pour maintenir le bain d'électrolyse à une température approprieé pour conserver à l'état fondu le ou les sels métalliques pendant la fabrication du fil électrode,
- des moyens de guidage et d'entraînement de fil pour guider l'âme filiforme puis le fil électrode et les entraîner à travers le bain de sels fondus,
- une source principale de courant électrique dont la borne négative est connectée électriquement à l'âme filiforme ou au fil électrode à l'extérieur du bain de sels fondus, et dont la borne positive est connectée électriquement à une anode conductrice en contact avec le bain de sels fondus, pour faire passer un courant électrique approprié dans le bain de sels fondus entre l'anode et l'âme filiforme lors de son passage dans le bain de sels fondus, assurant un dépôt de métal ou d'alliage par électrolyse sur l'âme filiforme.

Par exemple, le récipient peut contenir une couche supérieure liquide formée d'au moins un sel de métal en fusion, surmontant une couche inférieure liquide ou solide formée dudit métal.

Selon une réalisation avantageuse, des conducteurs viennent respectivement au contact de l'âme filiforme en amont du récipient et au contact du fil électrode en aval du récipient, et sont alimentés par une source auxiliaire de courant électrique, pour faire passer dans l'âme un courant électrique auxiliaire assurant un échauffement complémentaire par effet Joule de l'âme filiforme notamment lors de sa traversée du bain de sels fondus.

Selon l'invention, grâce à l'électrolyse dans un bain de sels fondus, par le choix du courant électrique d'électrolyse, on peut régler la vitesse de dépôt d'enrobage métallique sur l'âme conductrice de l'électricité dans une large plage de vitesses. Alors que, dans une électrolyse dans un bain de sels métalliques en solution aqueuse, les densités de courant d'électrolyse sont inférieures à une centaine d'ampères par décimètre carré, l'électrolyse dans un bain de sels fondus permet d'atteindre des densités de courant très supérieures. Les densités de courant plus élevées permettent d'élargir la plage de variation possible de la vitesse de dépôt de métal.

Simultanément, grâce à la température élevée du bain d'électrolyse et à l'échauffement thermique du fil qui en résulte, le procédé permet l'inter-diffusion thermique simultanée des métaux constituant la couche métallique et l'âme, lorsque ces métaux sont choisis de façon appropriée. Par exemple, le procédé permet simultanément le dépôt d'une couche de zinc sur une âme de cuivre ou alliage de cuivre, et la diffusion simultanée du zinc et du cuivre l'un dans l'autre. La vitesse de diffusion peut être adaptée par le choix indépendant de la température du bain de sels fondus.

Si on le désire, le procédé électrolytique permet de réaliser un dépôt de métal à une vitesse supérieure à celle de la diffusion thermique du métal de la couche métallique dans l'âme conductrice de l'électricité, par exemple pour augmenter la teneur de la couche périphérique du fil électrode en un métal déterminé tel que le zinc.

L'invention permet de régler à volonté la quantité de métal déposée, et de contrôler de façon indépendante et fiable la proportion et la profondeur de métal diffusé.

D'autres objets, caractéristiques et avantages de la présente invention ressortiront de la description suivante de modes de réalisation particuliers, faite en relation avec les figures jointes, parmi lesquelles:
- la figure 1 est une représentation schématique d'un dispositif de production d'un fil électrode pour électroérosion selon un mode de réalisation de la présente invention ;
- la figure 2 est une vue en perspective illustrant schématiquement un tronçon de fil électrode pour électroérosion selon l'invention ; et
- la figure 3 est une coupe transversale d'un fil électrode pour électroérosion selon un mode de réalisation particulier de la présente invention.

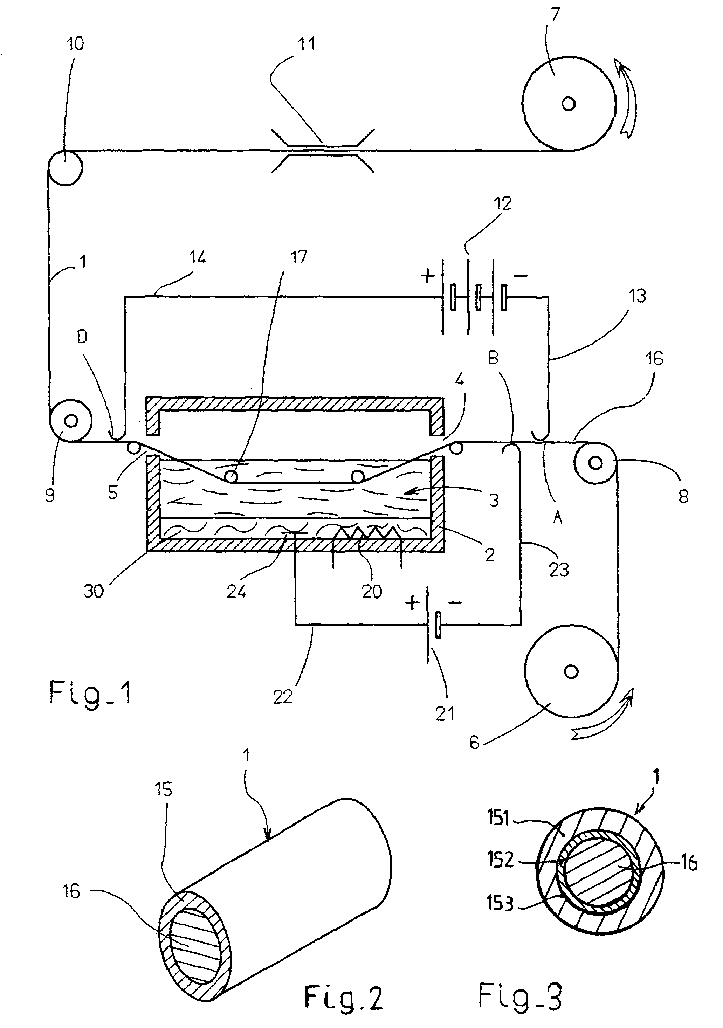

Dans le mode de réalisation illustré sur la figure 1, un dispositif selon l'invention pour la production d'un fil électrode 1 pour électroérosion comprend un récipient 2 adapté pour contenir un bain de sels fondus 3 contenant un ou plusieurs sels métalliques. Des moyens de chauffage, tels qu'une résistance électrique 20 connectée à une source extérieure d'alimentation électrique, maintiennent le bain d'électrolyse à une température appropriée pour conserver à l'état fondu le ou les sels métalliques pendant la fabrication du fil électrode 1. Le récipient 2 comprend un orifice d'entrée 4 et un orifice de sortie 5, adaptés pour permettre le passage en continu d'une âme filiforme 16 conductrice à travers le bain de sels fondus 3.

Des moyens de guidage et d'entraînement de fil permettent de guider l'âme filiforme 16 puis le fil électrode 1 et de les entraîner en translation longitudinale continue à travers le bain de sels fondus 3. Par exemple, l'âme filiforme 16 est délivrée à partir d'une bobine amont 6, en passant sur une ou plusieurs poulies de renvoi 8, et traverse le bain de sels fondus 3 entre les orifices d'entrée 4 et de sortie 5 du récipient 2 au moyen de guides appropriés 17. Dans le bain de sels fondus 3, l'âme filiforme 16 se charge d'une couche de métal déposé et devient un fil électrode 1. Le fil électrode 1, après la sortie 5 du récipient 2, est guidé par des poulies de renvoi 9 et 10 jusqu'à une bobine aval 7 où il est enroulé.

Le dispositif peut comprendre en outre une ou plusieurs filières 11 pour extruder le fil électrode 1 afin de l'allonger et de le mettre à dimension après son passage dans le récipient 2, et avant son enroulement sur la bobine aval 7.

Selon l'invention, le dispositif comprend en outre une source principale de courant électrique 21, dont la borne négative est connectée électriquement par un premier conducteur 23 à l'âme filiforme 16 ou au fil électrode 1 en un point B extérieur au bain de sels fondus 3, par exemple connectée à l'âme filiforme 16 en amont comme illustré sur la figure 1, et dont la borne positive est connectée électriquement par un second conducteur 22 au bain de sels fondus 3. Par exemple, le second conducteur 22 est connecté électriquement à une électrode 24 placée à l'intérieur du récipient 2 pour amener le courant électrique dans le bain de sels fondus 3.

Dans un premier mode de réalisation, au contact du bain de sels fondus 3, le récipient 2 contient une masse 30 formée d'un ou plusieurs métaux à l'état fondu. L'électrode 24 qui assure la polarité positive peut par exemple être en graphite, et se trouve avantageusement dans la masse 30 de métal en fusion. Les métaux de la masse 30 métallique en fusion sont avantageusement les mêmes que les métaux des sels métalliques du bain de sels fondus 3. Dans ce cas, le récipient 2 contient un bain 3 de sels d'un ou plusieurs métaux en fusion, au contact d'une masse 30 desdits métaux en fusion.

Dans ce premier mode de réalisation, la température du bain de sels fondus 3 est supérieure à la température de fusion des métaux constituant la masse 30 de métal en fusion, mais doit être choisie inférieure à la température de fusion de l'âme filiforme 16 du fil. La masse 30 de métal en fusion constitue l'anode au contact du bain de sels fondus 3. La température relativement élevée du bain de sels fondus 3, de l'ordre de 250°C à 700°C par exemple, assure la diffusion au moins partielle dans l'âme filiforme 16 du ou des métaux déposés par électrolyse sur l'âme filiforme 16.

Dans un second mode de réalisation, la température du bain de sels fondus 3 est choisie inférieure à la température de fusion du ou des métaux à déposer, et l'électrode 24 est avantageusement constituée par le ou lesdits métaux à déposer, à l'état solide. L'électrode 24 constitue alors elle-même l'anode, au contact du bain de sels fondus 3. La vitesse de diffusion sera moins élevée que dans le mode de réalisation précédent. Toutefois, la masse de métal déposée sur l'âme filiforme 16 pourra avantageusement se partager en une couche intermédiaire diffusée et une couche superficielle du ou des métaux non diffusés.

La source principale de courant électrique 21 fait passer un courant électrique approprié dans le bain de sels fondus 3 entre l'anode et l'âme filiforme 16 lors de son passage dans le bain de sels fondus 3, pour assurer un dépôt de métal par électrolyse sur l'âme filiforme 16.

La valeur choisie du courant électrique débité par la source principale de courant électrique 21, la température choisie du bain de sels fondus 3, et la durée de séjour du fil dans le bain de sels fondus 3 déterminent la structure du fil d'électroérosion 1.

Dans un mode de réalisation avantageux, le dispositif comprend aussi une source auxiliaire de courant électrique 12, connectée à des conducteurs 13 et 14 venant au contact respectivement de l'âme filiforme 16 en un point de contact A en amont du récipient 2, et du fil électrode 1 en un point de contact D en aval du récipient 2. La source auxiliaire de courant électrique 12 fait ainsi passer un courant électrique auxiliaire approprié dans l'âme filiforme 16 pendant son passage dans le bain de sels fondus 3, assurant un échauffement complémentaire de l'âme filiforme 16 par effet Joule.

De préférence, l'échauffement complémentaire de l'âme filiforme 16 par effet Joule doit permettre d'amener le fil à une température suffisamment élevée pour éviter la formation de phases d'alliage fragiles en surface de l'enrobage métallique 15. Par exemple, dans le cas d'un fil de cuivre enrobé de zinc, on peut éviter la formation de phases γ, δ ou ε.

Le courant électrique auxiliaire approprié peut avantageusement être tel que l'âme filiforme 16 est sensiblement amenée au rouge pendant son passage dans le bain de sels fondus 3.

Selon un premier mode de réalisation, le point de contact amont A est à proximité immédiate de l'orifice d'entrée 4 du récipient 2, et le point de contact aval D est à proximité immédiate de l'orifice de sortie 5 du récipient 2. Dans ce cas, l'échauffement complémentaire de l'âme filiforme 16 par effet Joule se produit dans le seul tronçon d'âme traversant le récipient 2 contenant le bain de sels fondus 3.

En alternative, on peut placer le point de contact aval D à l'écart de l'orifice de sortie 5 du récipient 2, pour poursuivre l'échauffement du fil électrode 1 par effet Joule après sa sortie hors du bain de sels fondus 3. On peut choisir d'assurer un échauffement du fil électrode 1 pendant une durée suffisante après sa sortie du bain de sels fondus 3 pour produire une inter-diffusion du métal périphérique d'apport et du métal constituant l'âme filiforme 16.

De façon avantageuse, on peut assurer un préchauffage de l'âme filiforme 16 par effet Joule en écartant le point de contact amont A par rapport à l'orifice d'entrée 4. On fait ainsi passer le courant électrique auxiliaire dans un tronçon approprié de l'âme filiforme 16 en amont du bain de sels fondus 3.

Dans le fonctionnement d'un dispositif de la figure 1, une âme filiforme 16 d'entrée, enroulée sur la bobine amont 6 et constituant la future âme du fil électrode 1, se dévide de la bobine amont 6, en passant sur la première poulie de renvoi 8, puis traverse le récipient 2 en pénétrant par l'orifice d'entrée 4 et en ressortant par l'orifice de sortie 5 sous forme d'un fil électrode 1 guidé par les poulies de renvoi 9 et 10 pour passer dans une filière 11 et être enroulé sur la bobine aval 7. Le bain de sels fondus 3 traversé par l'âme filiforme 16 dans le récipient 2 contient un ou plusieurs sels métalliques en fusion, et est maintenu par la résistance électrique 20 à une température supérieure à la température de fusion des sels. Par l'effet du courant électrique débité par la source principale de courant électrique 21, il se produit dans le récipient 2 une électrolyse du ou des sels métalliques en fusion, de sorte que le ou les métaux du ou des sels métalliques en fusion se déposent sur l'âme filiforme 16, produisant un fil électrode 1 à enrobage métallique 15 entourant une âme filiforme 16 comme illustré sur la figure 2.

Simultanément, par exemple dans le cas d'une âme filiforme 16 en un métal tel que le cuivre ou un alliage du cuivre, et dans le cas du dépôt d'un métal tel que le zinc dans l'enrobage métallique 15, du fait de la température élevée du bain de sels fondus 3, il se produit simultanément une inter-diffusion du ou des métaux de l'enrobage métallique 15 dans le ou les métaux de l'âme filiforme 16, à l'interface entre l'enrobage métallique 15 et l'âme 16, constituant par exemple une zone intermédiaire d'alliage diffusé tel que du laiton, ou un enrobage 15 entièrement diffusé.

Dans le mode de réalisation illustré sur la figure 1, pendant son passage à l'intérieur du récipient 2 contenant le bain de sels fondus 3, l'âme filiforme 16 est également traversée par le courant électrique auxiliaire débité par la source auxiliaire de courant électrique 12, ledit courant électrique auxiliaire assurant un échauffement supplémentaire du fil électrode 1 ou de l'âme filiforme 16 par effet Joule. Cet échauffement supplémentaire permet d'accélérer la diffusion des métaux entre l'enrobage métallique 15 et l'âme filiforme 16, et/ou d'améliorer l'accrochage de l'enrobage métallique 15 sur l'âme filiforme 16.

On comprendra que le procédé de l'invention consiste à prévoir au moins une étape de dépôt électrolytique de métal ou d'alliage sur une âme filiforme 16 par passage dans un bain de sels fondus 3. On peut aussi prévoir le dépôt successif de plusieurs couches de métaux ou d'alliages identiques ou différents sur une même âme filiforme 16.

Le fil électrode 1 obtenu par un procédé selon l'invention peut comprendre par exemple un enrobage 15 à couche de zinc surmontant une couche intermédiaire d'alliage diffusé de zinc à l'interface avec une âme 16 en cuivre ou en alliage de cuivre. La couche intermédiaire est en alliage de cuivre et de zinc obtenu par diffusion thermique.

Dans l'exemple de la figure 2, l'enrobage 15 est monocouche, constitué soit d'alliage entièrement diffusé, soit d'une couche épaisse de zinc non diffusé entourant une interface diffusée d'épaisseur très faible ou négligeable.

Dans l'exemple de la figure 3, l'enrobage 15 comprend une couche de zinc non diffusé 151 surmontant une couche intermédiaire d'alliage diffusé de zinc 152, avec une interface 153 nette.

Un tel fil électrode pour électroérosion présente d'excellentes propriétés, qui n'étaient pas aisément accessibles à l'aide des procédés connus de fabrication : la présence d'une couche intermédiaire 152 de laiton diffusé augmente la rapidité de l'usinage par électroérosion, tandis que la présence d'une couche superficielle 151 en zinc non diffusé permet d'obtenir une meilleure finition de surface de la pièce usinée par électroérosion. A titre d'exemple, un tel fil électrode peut être obtenu par électrolyse dans un bain de chlorure de zinc et de chlorure de potassium en mêmes concentrations molaires, maintenu à 450°C environ, en adaptant le temps de passage du fil et le courant électrique d'électrolyse en fonction des épaisseurs désirées de couche de zinc et de couche diffusée.

On peut en alternative prévoir une âme 16 en fer, en aluminium, ou autre métal, avec un enrobage 15 ayant une couche de cuivre ou d'alliage de cuivre ou autre métal ou alliage bon conducteur de l'électricité et une couche superficielle partiellement ou entièrement diffusée à base d'un métal à faible température de vaporisation tel que le zinc, le cadmium, l'étain, le plomb, l'antimoine et le bismuth.

La présente invention n'est pas limitée aux modes de réalisation qui ont été explicitement décrits, mais elle en inclut les diverses variantes et généralisations contenues dans le domaine des revendications ci-après.

## Revendications

1. Procédé de fabrication d'un fil électrode (1) pour électroérosion ayant une âme (16) filiforme conductrice de l'électricité entourée d'un enrobage (15) métallique à zone diffusée et adapté pour constituer la zone d'usure du fil lors de l'électroérosion, **caractérisé en ce qu'**il comprend au moins une étape d'électrolyse du fil électrode (1) défilant dans un bain d'électrolyse (3) composé essentiellement de sels fondus, pour assurer simultanément un apport de métal ou d'alliage constituant un dépôt sur une couche sous-jacente de métal ou d'alliage et la diffusion thermique dans la zone diffusée entre ledit dépôt et ladite couche sous-jacente.

2. Procédé selon la revendication 1, **caractérisé en ce que**, au cours de ladite étape d'électrolyse, les valeurs de densité de courant électrique d'électrolyse, de température du bain d'électrolyse (3) et de durée de défilement du fil électrode (1) dans le bain d'électrolyse (3) constituent des paramètres que l'on règle de façon à obtenir la structure désirée de l'enrobage (15) métallique.

3. Procédé selon la revendication 2, **caractérisé en ce que** les valeurs de densité de courant électrique d'électrolyse et de température du bain d'électrolyse (3) sont choisies de façon que la vitesse de dépôt de métal ou d'alliage soit supérieure à la vitesse de diffusion thermique, de sorte que la zone de surface du fil électrode (1) est formée d'une couche externe (151) de métal ou alliage de dépôt non diffusé, recouvrant une zone de diffusion (152).

4. Procédé selon la revendication 3, **caractérisé en ce que** la durée de défilement du fil électrode (1) dans le bain d'électrolyse (3) est choisie courte pour que la couche de surface (151) en métal ou alliage non diffusé soit relativement épaisse et recouvre une couche diffusée (152) de plus faible épaisseur.

5. Procédé selon la revendication 2, **caractérisé en ce que** les valeurs de densité de courant électrique d'électrolyse et de température du bain d'électrolyse (3) sont choisies de façon que la vitesse de dépôt de métal ou d'alliage soit inférieure à la vitesse de diffusion thermique, de sorte que la zone de surface du fil électrode est formée de métal ou alliage diffusé.

6. Procédé selon l'une quelconque des revendications 1 à 5, **caractérisé en ce que** l'apport de métal ou d'alliage est assuré en quantité suffisante pour que l'enrobage (15) présente dans le fil électrode (1) final une épaisseur de plusieurs microns.

7. Procédé selon l'une quelconque des revendications 1 à 6, **caractérisé en ce que** le métal d'apport est le zinc, et la couche sous-jacente est en cuivre ou alliage de cuivre.

8. Procédé selon l'une quelconque des revendications 1 à 7, **caractérisé en ce que** le bain de sels fondus contient au moins un sel de métal alcalin ou alcalino-terreux.

9. Procédé selon l'une quelconque des revendications 1 à 8, **caractérisé en ce que**, pendant son passage dans le bain de sels fondus (3), on augmente réchauffement de l'âme (16) filiforme par effet Joule en faisant passer un courant électrique auxiliaire approprié dans le tronçon d'âme filiforme traversant le bain de sels fondus (3).

10. Dispositif pour la mise en oeuvre d'un procédé selon l'une quelconque des revendications 1 à 9, pour la fabrication d'un fil électrode (1) pour électroérosion ayant une âme (16) filiforme conductrice de l'électricité entourée d'un enrobage métallique (15), comprenant :
- un récipient (2), contenant un bain d'électrolyse (3) composé essentiellement de sels métalliques fondus, adapté pour permettre le passage en continu de l'âme (16) filiforme à travers le bain de sels fondus (3), et comprenant des moyens de chauffage (20) pour maintenir le bain d'électrolyse à une température appropriée pour conserver à l'état fondu le ou les sels métalliques pendant la fabrication du fil électrode (1),
- des moyens de guidage et d'entraînement de fil (6, 7, 8, 9, 10, 4, 5) pour guider l'âme filiforme (16) puis le fil électrode (1) et les entraîner à travers le bain de sels fondus (3),
- une source principale de courant électrique (21) dont la borne négative est connectée électriquement à l'âme (16) filiforme ou au fil électrode (1) à l'extérieur du bain de sels fondus (3), et dont la borne positive est connectée électriquement à une anode conductrice en contact avec le bain de sels fondus (3), pour faire passer un courant électrique approprié dans le bain de sels fondus (3) entre l'anode et l'âme (16) filiforme lors de son passage dans le bain de sels fondus (3), pour assurer un dépôt de métal ou d'alliage par électrolyse sur l'âme (16) filiforme.

11. Dispositif selon la revendication 10, **caractérisé en ce que** des conducteurs (13, 14) viennent respectivement au contact de l'âme (16) filiforme en amont (A) du récipient et au contact du fil électrode (1) en aval (D) du récipient (2), et sont alimentés par une source auxiliaire de courant électrique (12), pour faire passer dans l'âme (16) filiforme un courant électrique auxiliaire assurant son échauffement complémentaire par effet Joule notamment lors de son passage dans le bain de sels fondus (3).

12. Fil électrode (1) pour électroérosion obtenu par un procédé selon l'une quelconque des revendications 1 à 9, **caractérisé en ce qu'**il comprend un enrobage (15) à couche de zinc non diffusé (151) surmontant une couche intermédiaire (152) d'alliage diffusé de zinc avec une interface (153) nette.

13. Fil électrode selon la revendication 12, **caractérisé en ce qu'**il comprend une âme (16) filiforme en cuivre ou en alliage de cuivre, et la couche intermédiaire (152) est en alliage de cuivre et de zinc obtenu par diffusion thermique.

## Patentansprüche

1. Verfahren zur Herstellung einer Drahtelektrode (1) für die Funkenerosion, die eine elektrisch leitfähige drahtförmige Seele (16) hat, welche von einer metallischen Ummantelung (15) in einer diffundierten Zone umgeben und dafür angepaßt ist, die Zone des Abbrandes des Drahtes bei der Funkenerosion zu bilden, **dadurch gekennzeichnet, daß** es wenigstens eine Stufe einer Elektrolyse der Drahtelektrode (1) aufweist, die sich in ein Elektrolysebad (3) abspult, das im wesentlichen aus geschmolzenen Salzen besteht, um gleichzeitig eine Zufuhr eines Metalls oder einer Legierung, welches bzw. welche eine Ablagerung auf einer darunterliegenden Metall- oder Legierungsschicht bildet, und die thermische Diffusion in der diffundierten Zone zwischen der besagten Ablagerung und der besagten darunterliegenden Schicht sicherzustellen.

2. Verfahren nach Anspruch 1, **dadurch gekennzeichnet, daß** im Verlauf der besagten Stufe einer Elektrolyse die Werte der elektrischen Stromdichte der Elektrolyse, der Temperatur des Elektrolysebades (3) und der Dauer des Abspulens der Drahtelektrode (1) in das Elektrolysebad (3) Parameter bilden, die so geregelt werden, daß die gewünschte Struktur der metallischen Ummantelung (15) erhalten wird.

3. Verfahren nach Anspruch 2, **dadurch gekennzeichnet, daß** die Werte der elektrischen Stromdichte der Elektrolyse und der Temperatur des Elektrolysebades (3) derart gewählt sind, daß die Geschwindigkeit der Ablagerung des Metalls oder der Legierung sich oberhalb der Geschwindigkeit der thermischen Diffusion befindet, sodaß die Oberflächenzone der Drahtelektröde (1) von einer äußeren Schicht (151) einer nicht diffundierten Ablagerung des Metalls oder der Legierung ausgebildet ist, welche eine Diffusionszone (152) bedeckt.

4. Verfahren nach Anspruch 3, **dadurch gekennzeichnet, daß** die Dauer der Abspulung der Drahtelektrode (1) in das Elektrolysebad (3) kurz gewählt ist, damit die nicht diffundierte Oberflächenschicht (151) aus dem Metall oder der Legierung relativ dick ist und eine diffundierte Schicht (152) einer dünneren Dicke bedeckt.

5. Verfahren nach Anspruch 2, **dadurch gekennzeichnet, daß** die Werte der elektrischen Stromdichte der Elektrolyse und der Temperatur des Elektrolysebades (3) derart gewählt sind, daß die Geschwindigkeit der Ablagerung des Metalls oder der Legierung niedriger liegt als die Geschwindigkeit der thermische Diffusion, sodaß die Oberflächenzone der Drahtelektrode aus diffundiertem Metall oder diffundierter Legierung gebildet ist.

6. Verfahren nach einem der Ansprüche 1 bis 5, **dadurch gekennzeichnet, daß** die Zufuhr des Metalls oder der Legierung in einer Menge sichergestellt ist, die dafür ausreicht, daß die Ummantelung (15) bei der fertigen Drahtelektrode (1) eine Dicke von mehreren Mikrons ergibt.

7. Verfahren nach einem der Ansprüche 1 bis 6, **dadurch gekennzeichnet, daß** das Metall der Zufuhr Zink ist und die darunterliegende Schicht aus Kupfer oder einer Kupferlegierung besteht.

8. Verfahren nach einem der Ansprüche 1 bis 7, **dadurch gekennzeichnet, daß** das Bad aus den geschmolzenen Salzen wenigstens ein alkalisches oder erdalkalisches Metallsalz enthält.

9. Verfahren nach einem der Ansprüche 1 bis 8, **dadurch gekennzeichnet, daß** während ihres Durchganges durch das Bad (3) der geschmolzenen Salze die Erwärmung der drahtförmigen Seele (16) durch Joulesche Wärme erhöht wird, indem ein passender elektrische Hilfsstrom durch den Teilabschnitt der Drahtelektrode durchgeleitet wird, welcher das Bad (3) der geschmolzenen Salze durchquert.

10. Vorrichtung zur Durchführung eines Verfahrens nach einem der Ansprüche 1 bis 9 zur Herstellung einer Drahtelektrode (1) für die Funkenerosion, die eine elektrisch leitfähige Seele (16) hat, welche von einer metallischen Ummantelung (15) umgeben ist, bestehend aus:
- einem Behälter (2), der ein Elektrolysebad (3) enthält, das im wesentlichen aus geschmolzenen Metallsalzen besteht, für die Ermöglichung des kontinuierlichen Durchgangs der drahtförmigen Seele (16) quer durch das Bad (3) der geschmolzenen Salze angepaßt ist und Heizmittel (20) aufweist, um das Elektrolysebad bei einer passenden Temperatur zu halten, für eine Konservierung des geschmolzenen Zustands des oder der metallischen Salze während der Herstellung der Drahelektrode (1),
- Mitteln zur Führung und zur Mitnahme des Drahtes (6, 7, 8, 9, 10, 4, 5), um die drahtförmige Seele (16) und danach die Drahtelektrode (1) zu führen und sie quer durch das Bad (3) der geschmolzenen Salze mitzunehmen,
- einer Hauptquelle (21) eines elektrischen Stromes, deren negative Anschlußklemme mit der drahtförmigen Seele (16) oder mit der Drahtelektrode (1) außerhalb des Bades (3) der geschmolzenen Salze elektrisch verbunden ist und deren positive Anschlußklemme elektrisch verbunden ist mit einer leitfähigen Anode, die mit dem Bad (3) der geschmolzenen Salze in Kontakt ist, um einen passenden elektrischen Strom in dem Bad (3) der geschmolzenen Salze zwischen der Anode und der drahtförmigen Seele (16) während ihres Durchganges durch das Bad (3) der geschmolzenen Salze hindurchzuleiten und eine Ablagerung eines Metalls oder einer Legierung durch eine Elektrolyse auf der drahtförmigen Seele (16) sicherzustellen.

11. Vorrichtung nach Anspruch 10, **dadurch gekennzeichnet, daß** Stromleiter (13, 14) in Kontakt kommen mit der drahtförmigen Seele (16) stromaufwärts (A) von dem Behälter und in Kontakt kommen mit der Drahtelektrode (1) stromabwärts (D) von dem Behälter (2) und von einer Hilfsquelle (12) eines elektrischen Stromes gespeist werden, um durch die drahtförmige Seele (16) einen elektrischen Hilfsstrom hindurchzuleiten, der ihre komplementäre Erwärmung durch Joulesche Wärme insbesondere während ihres Durchgangs durch das Bad (3) der geschmolzenen Salze sicherstellt.

12. Drahtelektrode (1) für die Funkenerosion, die durch ein Verfahren gemäß einem der Ansprüche 1 bis 9 erhalten ist, **dadurch gekennzeichnet, daß** sie eine Ummantelung (15) aus einer nicht diffundierten Zinkschicht (151) aufweist, welche über einer Zwischenschicht (152) aus einer mit Zink diffundierten Legierung mit einer deutlichen Grenzschicht (153) angeordnet ist.

13. Drahtelektrode nach Anspruch 12, **dadurch gekennzeichnet, daß** sie aus einer drahtförmigen Seele (16) aus Kupfer oder einer Kupferlegierung besteht und die Zwischenschicht (152) eine durch thermische Diffusion erhaltene Legierung aus Kupfer und Zink ist.

## Claims

1. A method of manufacturing a spark erosion electrode wire (1) having an electrically conductive wire core (16) surrounded by a metal coating (15) with a diffused area and adapted to constitute the wear area of the wire during spark erosion, **characterized in that** it includes at least one step of electrolysis of the electrode wire (1) passing through an electrolysis bath (3) consisting essentially of molten salts, to bring about simultaneously deposition of metal or alloy on an underlying layer of metal or alloy and thermal diffusion in the diffused area between said deposit and said underlying layer.

2. A method according to claim 1, **characterized in that**, during said electrolysis step, the electrolysis current density, the temperature of the electrolysis bath (3) and the time for which the electrode wire (1) remains in the electrolysis bath (3) are varied to obtain the required structure of the metal coating (15).

3. A method according to claim 2, **characterized in that** the electrolysis current density and the temperature of the electrolysis bath (3) are chosen so that the rate of deposition of the metal or alloy is greater than the rate of thermal diffusion so that the surface of the electrode wire (1) is formed of non-diffused deposited metal or alloy outer layer (151) covering a diffusion area (152).

4. A method according to claim 3, **characterized in that** the time for which the electrode wire (1) remains in the electrolysis bath (3) is short so that said outer layer (151) of non-diffused metal or alloy is relatively thick and covers a thinner diffused layer (152).

5. A method according to claim 2, **characterized in that** the electrolysis current density and the temperature of the electrolysis bath (3) are chosen so that the rate of deposition of the metal or alloy is less than the rate of thermal diffusion so that the surface of the electrode wire is formed of diffused metal or alloy.

6. A method according to any one of claims 1 to 5, **characterized in that** the metal or alloy is deposited in sufficient quantity for the coating (15) to have a thickness of several microns in the final electrode wire (1) .

7. A method according to any one of claims 1 to 6, **characterized in that** the deposited metal is zinc, and the underlying layer is copper or copper alloy.

8. A method according to any one of claims 1 to 7, **characterized in that** the bath of molten salts contains at least one alkaline metal or alkali earth salt.

9. A method according to any one of claims 1 to 8, **characterized in that**, while it is passing through the molten salt bath (3), the heating of the wire core (16) is increased by the Joule effect by passing an appropriate auxiliary electrical current through the portion of the wire core passing through the molten salt bath (3).

10. A device for implementing a method according to any one of claims 1 to 9 for manufacturing a spark erosion electrode wire (1) having an electrically conductive wire core (16) surrounded by a metal coating (15), the device comprising:
- a container (2), containing an electrolysis bath (3) essentially composed of molten metal salts, adapted to enable the wire core (16) to pass continuously through the molten salts bath (3), and comprising heating means (20) to maintain the electrolysis bath at an appropriate temperature to keep the metallic salt(s) in the molten state during manufacturing of the electrode wire (1),
- means (6, 7, 8, 9, 10, 4, 5) for guiding and feeding the wire core (16) and then the electrode wire (1) through the molten salts bath (3),
- a main electrical power supply (21) whose negative terminal is electrically connected to the wire core (16) or to the electrode wire (1) outside the molten salts bath (3), and whose positive terminal is electrically connected to a conductive anode in contact with the molten salts bath (3) to pass an appropriate electrical current into the molten salts bath (3) between the anode and the wire core (16) as it moves through the molten salts bath (3) to deposit metal or alloy electrolytically on the wire core (16).

11. A device according to claim 10, **characterized in that** conductors (13, 14) are respectively in contact with the wire core (16) upstream (A) of the container and with the electrode wire (1) downstream (D) of the container (2), and are connected to an auxiliary electrical power supply (12) to pass an auxiliary electrical current providing additional heating by the Joule effect through the wire core (16), in particular while it is passing through the molten salts bath (3).

12. An electrode wire (1) for spark erosion obtained by a method according to any one of claims 1 to 9, **characterized in that** it includes a coating (15) with a non-diffused zinc layer (151) on top of a diffused intermediate zinc alloy layer (152) with a clear interface (153).

13. An electrode wire according to claim 12, **characterized in that** it includes a copper or copper alloy wire core (16), and the intermediate layer (152) is an alloy of copper and zinc obtained by thermal diffusion.
